Europäisches Patentamt

European Patent Office

Office européen des brevets

(19)

(11) **EP 0 910 871 B1**

(12) **FASCICULE DE BREVET EUROPEEN**

(45) Date de publication et mention
de la délivrance du brevet:
**21.11.2001 Bulletin 2001/47**

(21) Numéro de dépôt: **97930588.5**

(22) Date de dépôt: **25.06.1997**

(51) Int Cl.⁷: **H01L 41/09**

(86) Numéro de dépôt international:
**PCT/FR97/01135**

(87) Numéro de publication internationale:
**WO 97/50134 (31.12.1997 Gazette 1997/57)**

(54) **MOTEUR PIEZOACTIF A BASE DE MODULES STATORIQUES INDEPENDANTS**

PIEZOELEKTRISCHER MOTOR MIT UNABHÄNGIGEN STATORMODULEN

PIEZO-ACTIVE ENGINE BASED ON INDEPENDENT STATOR MODULES

(84) Etats contractants désignés:
**DE GB IT**

(30) Priorité: **27.06.1996 FR 9608240**

(43) Date de publication de la demande:
**28.04.1999 Bulletin 1999/17**

(73) Titulaire: **Cedrat-Recherche**
**38240 Meylan (FR)**

(72) Inventeurs:
• **CLAEYSSEN, Frank**
**F-38240 Meylan (FR)**
• **LE LETTY, Ronan**
**F-38000 Grenoble (FR)**
• **LHERMET, Nicolas**
**F-38240 Meylan (FR)**

(74) Mandataire: **Hecké, Gérard**
**Cabinet HECKE**
**World Trade Center - Europole,**
**5, Place Robert Schuman,**
**BP 1537**
**38025 Grenoble Cedex 1 (FR)**

(56) Documents cités:
**EP-A- 0 370 508          EP-A- 0 643 427**
**DE-A- 1 613 087**

• **PATENT ABSTRACTS OF JAPAN vol. 009, no.**
**325 (E-368), 20 décembre 1985 & JP 60 156283 A**
**(TOUHOKU KINZOKU KOGYO KK), 16 août 1985,**
• **PATENT ABSTRACTS OF JAPAN vol. 012, no.**
**254 (E-634), 16 juillet 1988 & JP 63 039478 A**
**(NISSAN MOTOR CO LTD), 19 février 1988,**

## Description

## Domaine technique de l'invention

L'invention est relative à un moteur piézoactif équipé d'un ou plusieurs modules statoriques destinés à vibrer pour provoquer le déplacement relatif d'un élément mené, sur une grande course suivant un fonctionnement dynamique, et éventuellement un fonctionnement en pas à pas, à l'aide de moyens d'entraînement par frottement, les dits modules statoriques permettant de plus, en se déformant, le positionnement fin de l'élément mené suivant un fonctionnement en actionneur direct, chaque module statorique comportant au moins :

- une paire d'actionneurs piézoactifs disposés colinéairement et excités électriquement de façon à se déformer et produire des petits déplacements longitudinaux,
- un élément de couplage mécanique auquel sont appliquées les déplacements des deux actionneurs, le dit élément étant constitué par un anneau conformé en coque, et réalisé en un matériau élastique déformable, en entourant chaque paire d'actionneurs par fixation en deux points opposés.

## Etat de la technique

Le document EP-A- 313 072 A1 décrit un moteur piézoactif utilisant un fonctionnement dynamique, dont le stator est constitué d'une tête animée par un ou deux actionneurs piézoactifs dont la direction d'actionnement est inclinée en angle oblique par rapport à la direction du mouvement de l'élément mené. Il nécessite une configuration particulière d'entraînement adapté à l'entraînement d'objets souples et flexibles tels que des feuilles de papier et basée sur un rouleau dont le coefficient de frottement vis-à-vis de la pièce menée est inférieur à celui de la tête vis-à-vis de la pièce menée. Un inconvénient majeur de ce stator est de provoquer la flexion des actionneurs piézoactifs simultanément à leur extension. Une telle flexion est préjudiciable compte tenu des limites en contraintes des matériaux actifs et réduit les performances en puissance du moteur. Un autre inconvénient est de nécessiter une configuration particulière d'entraînement qui limite considérablement le champ d'application du moteur. Enfin, l'absence de tout découplage entre le stator et le bâti entraîne des vibrations au bâti qui perturbent son fonctionnement.

Le document EP-A-313 072 A1 décrit aussi un procédé qui consiste à réaliser le positionnement fin à l'aide d'un fonctionnement en actionneur direct après avoir réalisé un positionnement grossier à l'aide d'un fonctionnement dynamique en haute fréquence. Le fonctionnement en actionneur direct fait intervenir un déplacement qui doit pouvoir être dans deux sens, ce qui conduit à des contraintes sur l'électronique, pénalisantes en terme de coût. Le ou les actionneurs piézoélectriques doivent pouvoir se déformer en élongation et en contraction. Or en pratique, cette contraction est nettement inférieure à l'élongation à cause de la limite en champ coercitif, ce qui limite la course de micropositionnement. Par ailleurs, il n'est pas possible dans ce procédé connu de faire appel à un fonctionnement pas à pas, utile pour s'approcher au plus près, dans le but d'économie ultérieure de consommation en fonctionnement en actionneur direct.

Le document US 5424597 décrit un moteur piézoactif utilisant un fonctionnement en pas à pas, dont le stator est basé sur deux bras piézoactifs parallèles, chacun étant constitué d'un translateur et d'un élément de contrôle et faisant appel à des liaisons à pivots élastiques. Ce moteur fonctionne en faisant en sorte qu'un premier bras établisse une connexion avec l'élément mené par pincement, pendant que le second bras se déplace et établisse un point de connexion un peu plus loin avant que le premier bras se déplace à son tour, et ainsi de suite. Ce fonctionnement pas à pas est possible en quasi statique, c'est à dire suivant des cycles dont la fréquence est basse, de 50 à 100 Hz, et conduit à une vitesse égale à 1mm/s au maximum.

Un inconvénient majeur de ce moteur est de ne pas pouvoir utiliser de mode de fonctionnement dynamique, à cause des temps de recouvrement nécessaires, et des vibrations qui seraient transmises au bâti, ce qui limite sa vitesse et son rendement.

Le document FR-A-2 564 912 décrit un moteur piézoactif composé de deux actionneurs piézoactifs colinéaires et d'un coupleur mécanique en forme de coque annulaire elliptique. La coque reçoit les vibrations produites par les actionneurs via des têtes, ce qui génère en son sommet des déplacements à trajectoire elliptique. La figure présentant le principe du stator montre que l'arrière des actionneurs est fixé à un bâti immobile. Suivant ce principe, le document décrit en détail de nombreuses structures de moteurs où les actionneurs sont placés à l'extérieur de la coque. Il présente aussi quelques configurations de stators où les actionneurs sont placés à l'intérieur de la coque. Dans ce cas, un support médian ou bâti, porte les actionneurs de chaque côté. Ce support médian fait partie intégrante du bâti, sans être découplé mécaniquement. Il est de plus présenté au niveau du raccordement avec les actionneurs sous la forme d'une pièce mince et légère, dont la masse est faible par rapport à celle de la coque.

A cause de cette structure, les configurations de moteur à actionneurs internes sont incompatibles avec le principe proposé dans le document et ne permettent pas un fonctionnement dynamique convenable. Les déformations longitudinales des actionneurs internes provoquent essentiellement le déplacement du support médian à cause de sa faible inertie, au lieu de celui de la coque. Le déplacement du support médian se propage dans tout le bâti. Le comportement d'un module n'est pas indépendant du bâti et des autres modules.

**Objet de l'invention**

L'objet de l'invention consiste à réaliser un moteur piézoactif compact à bon rendement, où les vibrations sont produites à la fois efficacement et de façon bien localisée dans des modules statoriques indépendants, et offrant de plus des possibilités de positionnement fin.

Le moteur piézoactif selon l'invention est caractérisé en ce que :

- chaque module statorique est indépendant des autres, est libre de vibrer, et n'est fixé à d'autres pièces que par des liaisons élastiques assurant un découplage en vibration,
- chaque module statorique comporte de plus une contre-masse centrale jouant le rôle d'inertie, insérée sans jeu à l'intérieur des coques entre les actionneurs piézoactifs et les coques,
- des premiers moyens de déformation en translation, sont actifs lorsque lesdits actionneurs piézoactifs se déforment longitudinalement en opposition et produisent un déplacement tangentiel des sommets de la coque relativement à la contre-masse,
- des seconds moyens de déformation en flexion, sont actifs lorsque lesdits actionneurs piézoactifs se déforment longitudinalement de la même façon et produisent une flexion de la coque entraînant un déplacement normal des sommets, la contre-masse restant immobile au centre,
- le rapport de masse entre la contre-masse et la coque est choisi pour qu'en vibration en translation, les déformations longitudinales des actionneurs internes génèrent un déplacement de la coque, d'amplitude non négligeable par rapport à celle de la contre-masse,
- la combinaison des premiers et seconds moyens de déformation étant obtenue lorsque lesdits actionneurs piézoactifs se déforment longitudinalement à la même fréquence avec un déphasage mécanique différent de 0° ou 180°, et produisent une trajectoire fermée des sommets utilisable pour provoquer par frottement le déplacement relatif de l'élément mené.

Le fonctionnement des modules statoriques du moteur selon l'invention est basé sur les deux déformations indépendantes suivantes:

- Un premier type de déformation, appelée déformation en translation, est obtenu lorsque lesdits actionneurs piézoactifs se déforment longitudinalement en opposition en produisant un déplacement tangentiel des sommets de la coque relativement à la contre-masse.

- Un second type de déformation, appelée déformation en flexion, est obtenu lorsque lesdits actionneurs piézoactifs se déforment longitudinalement de manière identique en produisant une flexion de la coque, la contre-masse restant immobile au centre. Un tel fonctionnement entraîne un déplacement normal des sommets de la coque.

Une alimentation des actionneurs en tension continue produisant l'une ou l'autre de ces déformations permet d'obtenir et de maintenir un déplacement des sommets de coque.

Une alimentation des actionneurs en tension variable périodique à la même fréquence, produit la déformation en translation lorsque les actionneurs se déforment en opposition de phase mécanique, et en flexion lorsque les actionneurs se déforment en opposition de phase mécanique. Des vibrations des sommets sont alors obtenues soit en quasi statique, soit en résonance mécanique, selon la fréquence. Le mode de translation et le mode de flexion sont associés respectivement aux déformations en translation et en flexion, et se produisent à des fréquences de résonance respectivement dites de translation et de flexion .

Une combinaison de ces deux types de déformation est réalisée lorsque lesdits actionneurs piézoactifs se déforment longitudinalement de façon non symétrique et non anti-symétrique. En régime périodique, ce cas est obtenu dans les cas où les actionneurs ne sont ni en phase, ni en opposition de phase, par exemple quand les actionneurs sont en quadrature de phase. Le déplacement relatif du sommet de la coque présente alors une composante tangentielle déphasée par rapport à sa composante normale pouvant donner lieu à une trajectoire fermée, par exemple elliptique. Cette trajectoire peut être produite en régime quasi statique, en exploitant l'un des modes, ou de façon plus avantageuse, en exploitant les modes de translation et de flexion en accord. Dans ce cas, il faut que les fréquences de résonance de ces modes coïncident approximativement, ce que permet la structure à contre-masse, selon l'invention.

L'importance de la contre-masse pour obtenir un déplacement de la coque non négligeable par rapport à celui de la contre-masse lors des vibrations exploitant la déformation en translation, est révélée par des expressions analytiques établies dans le cas générique d'un module à une coque non chargée, à deux actionneurs et une contre-masse et donnant les valeurs approchées du rapport des amplitudes de déplacements Um de la contre-masse et Uc de la coque, à partir de Mc la masse de la coque, et Mm la masse de la contre-masse:

$$Uc/Um = Mm/Mc$$

Cette expression montre que pour obtenir un déplacement de la coque, non négligeable par rapport à celui de la contre-masse, il est essentiel que le rapport de masse Mm/Mc ne soit pas trop faible.

L'importance de la contre-masse pour l'accord des modes de translation et de flexion est révélée par des expressions analytiques établies dans ce même cas et donnant les valeurs approchées de la fréquence Ft du mode de translation, et de la fréquence Ff du mode de flexion, à partir de Ka la raideur d'un actionneur, Kc la raideur de la coque en flexion par actionneur, Mc la masse de la coque, Mc* la masse modale de la coque en mode de flexion et de Mm la masse de la contre-masse :

$$Ft=1/(2.pi).(2.Ka.(1/Mc+1/Mm))^{1/2}$$

et

$$Ff=1/(2.pi).(2.(Ka+Kc)/Mc^*)^{1/2}$$

L'accord des modes Ft=Ff est obtenu lorsque la masse Mm remplit la condition suivante :

$$Mc/ Mm = (1+Kc/Ka).Mc/Mc^* -1$$

Comme Mc>Mc* et Kc/Ka>0, il vient que Mc/Mm>0 , ce qui garantit l'existence d'une solution pour Mm. En pratique, Kc et Ka sont du même ordre de grandeur, de même que Mc et Mc*, ce qui implique que Mm est aussi du même ordre de grandeur que Mc.

Ces deux conditions sont compatibles entre elles, et conduisent à un rapport de masse Mm/Mc situé typiquement dans une fourchette de 1/3 à 3.

Selon une caractéristique de l'invention, une masse additionnelle démontable est associée à la contre-masse pour faciliter le réglage de l'accord des modes de translation et de flexion. Le changement des masses additionnelles modifie la fréquence du mode de translation sans modifier la fréquence du mode de flexion. Cette possibilité de réglage est utile pour corriger le désaccord introduit par le contact des sommets des coques avec l'élément mené, et par la précharge.

Dans le moteur suivant l'invention, la contre-masse est découplée de tout bâti pour pouvoir vibrer librement. Ainsi suivant les cas, elle est soit totalement libre, soit attachée au bâti ou à l'arbre d'actionnement par des liaisons élastiques , notamment en forme de lames.

La coque de l'élément de couplage peut présenter une forme quelconque, par exemple une forme cylindrique à section circulaire, elliptique ou en anse de panier symétrique, ou une forme de sphère ajourée ou d'ellipsoïde ajourée. Dans le cas des coques non circulaires, le rapport grand axe sur petit axe n'est pas limité à une valeur particulière, grâce à la contre-masse.

Les actionneurs piézoactifs se caractérisent par leur aptitude à se déformer longitudinalement, en allongement ou en contraction, sous l'action d'une commande électrique. Ils sont réalisés à base d'éléments piézoélectriques, électrostrictifs ou magnétostrictifs. Le déphasage mécanique des déformations des actionneurs d'un module est obtenu en appliquant un déphasage électrique entre leurs tensions d'alimentation.

L'utilisation d'un ou de plusieurs modules statoriques, impliquant qu'au moins un des sommets des coque soit pressé contre un guide, un rotor ou un élément mené présentant au moins un degré de liberté par rapport à ces modules, permet de réaliser des moteurs linéaires, rotatifs ou à plusieurs degrés de liberté, exploitant deux ou trois types de fonctionnement différents.

La pression statique entre les modules statoriques et le guide, le rotor ou l'élément mené par l'intermédiaire d'un élément élastique tel qu'un ressort ou une lame de flexion, appelée précharge, est appliquée au montage. Elle permet en statique d'assurer le maintien des modules par rapport au guide, au rotor ou à l'élément mené. En fonctionnement, la précharge permet le rattrapage de jeu, dû par exemple à l'usure.

Pour obtenir un bon entraînement et un bon contact avec le guide, le rotor ou l'élément mené, ces pièces ou les sommets des coques peuvent être revêtus d'une couche de frottement par exemple une couche de polymère.

Dans le fonctionnement en dynamique, les moteurs suivant l'invention utilisent la trajectoire fermée produite au sommet des modules statoriques pour induire par frottement un mouvement relatif du guide, du rotor ou de la pièce menée, en profitant de son inertie. La course obtenue peut ainsi être bien supérieure à l'amplitude de vibration des modules, et est conservée avec les actionneurs hors tension. L'utilisation des modes de translation et de flexion accordés pour générer la trajectoire fermée permet de bénéficier de l'effet de surtension mécanique des deux modes. Des amplitudes de vibration tangentielles et normales élevées sont ainsi produites au sommet des coques et procurent au moteur une vitesse élevée, un bon rendement électromécanique et l'avantage d'une alimentation en basse tension.

Dans le fonctionnement en pas à pas, qui est possible avec les moteurs basés sur des modules statoriques à plusieurs coques coaxiales, suivant une possibilité de l'invention, les moteurs utilisent les trajectoires fermées des coques, déphasées entre elles au sein d'un même module, pour induire par frottement un mouvement relatif du guide, du rotor ou de la pièce menée, en profitant de leur raideur transverse. La course obtenue peut ainsi être bien supérieure à l'amplitude de vibration des modules et est conservée avec les actionneurs hors tension. Ce fonctionnement est particulièrement avantageux dans le cas d'une utilisation en basse fréquence évitant tout effet d'inertie de l'élément mené, car il permet son arrêt en position sans glissement. Il procure au moteur une vitesse lente et une très bonne contrôlabilité en positionnement micronique. Son utilisation conduit à la mise en oeuvre d'un cadencement de commande spécifique.

Dans le fonctionnement en actionneur direct, les moteurs suivant l'invention utilisent la déformation quasi statique en translation ou en flexion des modules pour obtenir un positionnement fin, les sommets de la coque restant en contact avec le guide, le rotor ou l'élément mené. Le déplacement obtenu est inférieur à l'amplitude de vibration des modules et n'est conservé qu'avec les actionneurs sous tension. Dans le cas particulièrement intéressant où les modules sont rattachés par un point situé sur l'avant de la coque et dans l'axe des actionneurs, la déformation en flexion est utilisée, ce qui ne nécessite que des déformations en extension des actionneurs. Ces déformations exploitent bien les déformations maximales des matériaux piézoélectriques sans rencontrer leur limite en champ coercitif. Elles peuvent de plus être engendrées avec des tensions d'alimentation de même signe, toutes positives par exemple, ce qui simplifie l'électronique. Le déplacement produit est alors limité à un seul sens ce qui conduit à la mise en oeuvre d'un cadencement de commande spécifique.

Ce fonctionnement procure au moteur une aptitude au positionnement submicronique.

Ces différents modes de fonctionnement sont complémentaires et peuvent être utilisés conjointement pour effectuer un positionnement à la fois rapide et précis.

Le fonctionnement en dynamique est utilisé pour réaliser les grandes courses jusqu'à l'approche de la position visée.

Le fonctionnement en actionneur direct est utilisé si un positionnement fin est nécessaire.

Le fonctionnement en pas à pas permet une approche plus précise du positionnement visé que le fonctionnement en dynamique, permettant une réduction de la consommation du fonctionnement en actionneur direct.

Un mode de réalisation préférentiel conduit à un moteur linéaire à un module statorique mobile à deux coques, exploitant les trois types de fonctionnement. Selon ce mode, le module statorique comprend une contre-masse, liée à deux paires parallèles d'actionneurs coaxiaux, chaque paire d'actionneurs coaxiaux agissant sur une coque. Ce module statorique est placé à l'intérieur d'un bâti à deux plaques de guidage fixes, venant en engagement avec les sommets opposés des coques, lesdites plaques s'étendant parallèlement et symétriquement par rapport à la ligne d'alignement des actionneurs piézoactifs. Un contact pressant des plaques de guidage avec le sommet des coques est assuré par un dispositif à rattrapage de jeu à liaison élastique, préchargé au montage. Dans cette structure, l'arbre d'actionnement peut être fixé à la contre-masse via un découplage élastique et passe entre les deux coques.

Pour obtenir un moteur piézoactif sans palier et à fonctionnement non lubrifié, l'arbre d'actionnement du moteur est accouplé directement à l'avant des coques par l'intermédiaire d'une liaison élastique à flexion. Dans ce cas, le module statorique est positionné par rapport au bâti au moyen d'organes de guidage élastique, fixés au bâti et à l'avant et à l'arrière des coques.

Il est particulièrement avantageux d'obtenir un moteur à deux degrés de liberté, avec un module statorique comprenant:

- une première paire d'actionneurs piézoélectriques placés colinéairement de part et d'autre de la contre-masse,

- une deuxième paire d'actionneurs piézoélectriques disposés colinéairement de part et d'autre de la contre-masse, et orthogonalement à la première paire,

- la coque comprenant quatre branches en forme de demi-ellipsoïdes enveloppant lesdits actionneurs, de manière à générer à son sommet des mouvements dans deux plans perpendiculairement entre eux.

Le module statorique est disposé à l'intérieur d'une coupelle, et coopère avec un dispositif à ressorts pour fournir un moteur de type rotule, à deux degrés de liberté en rotation sur un débattement angulaire limité.

Selon une variante de réalisation, la coque du module statorique du moteur coopère avec un secteur angulaire d'une roue articulée sur un axe, un ressort étant ancré entre la masse d'inertie, et un point d'ancrage.

**Description des figures**

D'autres avantages et caractéristiques ressortiront plus clairement de la description qui va suivre de différents modes de réalisation donnés à titre d'exemples non limitatifs, et représentés aux dessins annexés dans lesquels:

- la figure 1 représente une vue schématique d'un module statorique selon l'invention, dans l'état de repos sans excitation des actionneurs piézoélectriques;

- la figure 2 représente schématiquement la structure de la figure 1 dans une déformation en translation, en traits continus, comparée à la structure au repos, en traits pointillés;

- la figure 3 représente schématiquement la structure de la figure 1 dans une déformation en flexion, en traits continus, comparée à la structure au repos, en traits pointillés;

- la figure 4 est une vue identique de la figure 1, avec montage d'une masse additionnelle démontable, fixée sur la contre-masse;

- la figure 5 est une vue de profil de la figure 4;

- la figure 6 représente schématiquement une vue en coupe d'un module statorique à deux coques selon la ligne 1-1 de la figure 1;

- la figure 7 représente schématiquement une vue de dessus du module statorique à deux coques de la figure 6, dans une déformation en translation où les deux coques sont en opposition de phase mécanique, en traits continus, comparée à la structure au repos, en traits pointillés;

- la figure 8 représente schématiquement une vue de dessus du module statorique à deux coques de la figure 6, dans une déformation en flexion où les deux coques sont en opposition de phase mécanique, en traits continus, comparée à la structure au repos, en traits pointillés;

- la figure 9 montre un module statorique de structure tridimensionnelle, adapté pour un moteur piézoactif à deux degrés de liberté;

- la figure 10 représente un premier mode de réalisation d'un moteur piézoactif linéaire, représenté en coupe selon la ligne 10-10 de la figure 12;

- la figure 11 est une vue en coupe selon la ligne 11-11de la figure 10;

- la figure 12 est une vue en coupe selon la ligne 12-12 de la figure 11;

- la figure 13 illustre une translation submicronique de l'arbre d'actionnement pour un positionnement fin, suite à une déformation quasi-statique en translation du module;

- la figure 14 illustre un deuxième mode de réalisation d'un moteur piézoactif linéaire selon l'invention;

- la figure 15 est une vue en coupe selon la ligne 15-15 de la figure 14;

- la figure 16 est une vue de dessus de la figure 15;

- la figure 17 montre une translation submicronique de l'arbre d'actionnement pour un positionnement fin, suite à une déformation quasi-statique en flexion du module;

- la figure 18 montre un troisième mode de réalisation d'un moteur piézoactif à deux degrés de liberté en rotation;

- la figure 19 montre un quatrième mode de réalisation d'un moteur piézoactif à entraînement rotatif;

- la figure 20 illustre une variante de réalisation pour un moteur piézoactif linéaire;

- la figure 21 est une vue de profil de la figure 20;

- la figure 22 est une vue identique de la figure 20 d'une autre variante de réalisation;

- la figure 23 représente schématiquement un moteur rotatif à quatre modules;

- la figure 24 représente une vue en coupe selon la ligne 24-24 de la figure 23;

- la figure 25 montre un organigramme d'un premier cadencement exploitant des modes de fonctionnement en pas à pas et en dynamique;

- la figure 26 montre un organigramme d'un deuxième cadencement exploitant les modes de fonctionnement en dynamique et en tension continue positive.

**Description d'un mode de réalisation préférentiel**

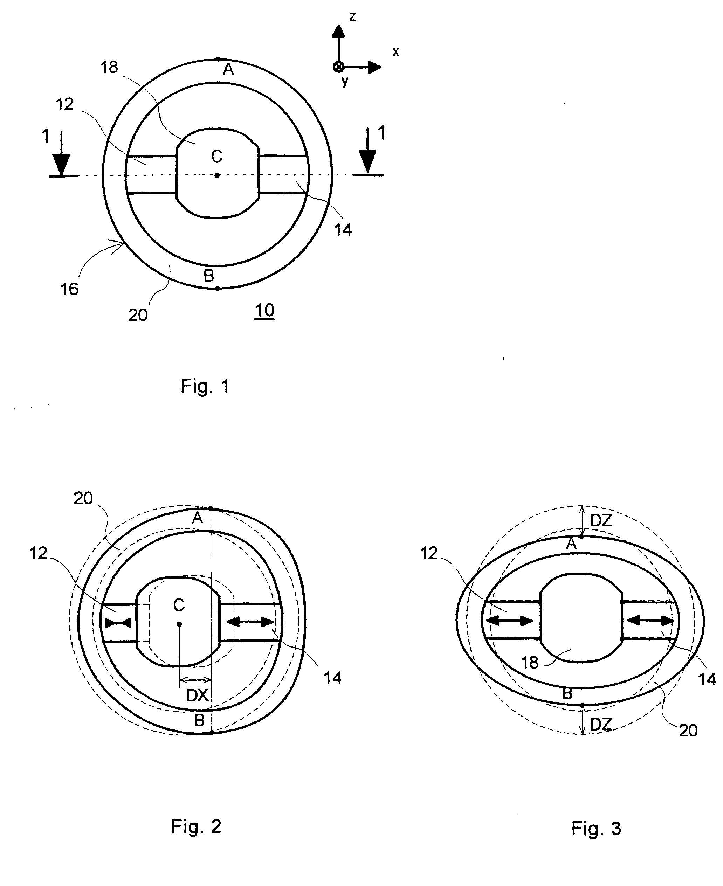

En référence à la figure 1, le stator 10 vibrant d'un moteur piézoactif comporte deux actionneurs piézoactifs 12, 14 agencés colinéairement à l'intérieur d'un élément de couplage 16 mécanique avec interposition dans la partie centrale d'une contre-masse 18 mobile. Les actionneurs piézoactifs peuvent être réalisés à titre d'exemples à l'aide de matériaux céramiques frittés de PZT. A titre d'exemple, un actionneur peut être une céramique massive ou multicouche, un empilement de céramiques, un bilame constitué d'une lame inactive et d'une couche piézoactive ou un trilame constitué d'une lame inactive et de deux couches piézoactives. Dans ces deux derniers cas, la coque, la contre-masse et la lame inactive peuvent être réalisées en une seule pièce plate ayant la forme du module complet, sur laquelle les couches piézoactives sont rapportées.

A la place des actionneurs piézoactifs, il est également possible d'utiliser des actionneurs magnétostrictifs, ou électrostrictifs. Les actionneurs 12, 14 sont fixés par tout moyen en deux points diamétralement opposés à l'intérieur de l'élément de couplage 16, et en deux points diamétralement opposés de la coque 12.

L'élément de couplage mécanique 16 est constitué par un anneau fermé conformé selon une coque 20, et réalisé en un matériau élastiquement déformable, par exemple en acier ou en alliage d'aluminium. Sur la figure 1, l'anneau de l'élément de couplage 16 est cylindrique, mais il pourrait également avoir une forme elliptique ou en forme de panier.

Sous l'effet de signaux d'alimentation délivrés par un générateur ou une source d'énergie, les actionneurs piézoactifs 12, 14 produisent des déplacements longitudinaux ou des vibrations longitudinales dans la direction de l'axe diamétral d'alignement des actionneurs.

Les déplacements produits par les actionneurs piézoactifs 12, 14 lors d'une excitation électrique, sont transmises à la coque 20 de l'élément de couplage 16, laquelle est soumise à deux déformations indépendantes.

La figure 2 présente schématiquement la déformation en translation obtenue lorsque les actionneurs piézoactifs 12, 14 se déforment longitudinalement en opposition de phase mécanique, c'est à dire l'un en contraction, l'autre en élongation, et produisent un déplacement tangentiel relatif DX des sommets A et B de la coque 20 par rapport au centre C de la contre-masse 18. Cette déformation peut être produite en régime quasi statique ou au mode de translation.

La figure 3 présente schématiquement la déformation en flexion obtenue lorsque les actionneurs piézoactifs 12, 14 se déforment longitudinalement en phase mécanique, c'est à dire de la même façon, et produisent une flexion de la coque 20 entraînant un déplacement normal DZ des sommets A et B de la coque, la contre-masse 18 restant immobile au centre. Cette déformation peut être produite en régime quasi statique ou au mode de flexion.

La combinaison de ces deux types de déformation est réalisée lorsque les actionneurs piézoactifs se déforment longitudinalement à la même fréquence dans les autres cas de phase mécanique, tels que la quadrature de phase. Les déplacements des sommets A et B de la coque décrivent alors une trajectoire fermée par exemple elliptique, utilisée pour entraîner par frottement une pièce menée. Cette trajectoire peut être produite en régime quasi statique, ou de façon plus avantageuse, en exploitant un accord approximatif des modes de translation et de flexion pour bénéficier de l'effet de surtension dû à la résonance mécanique.

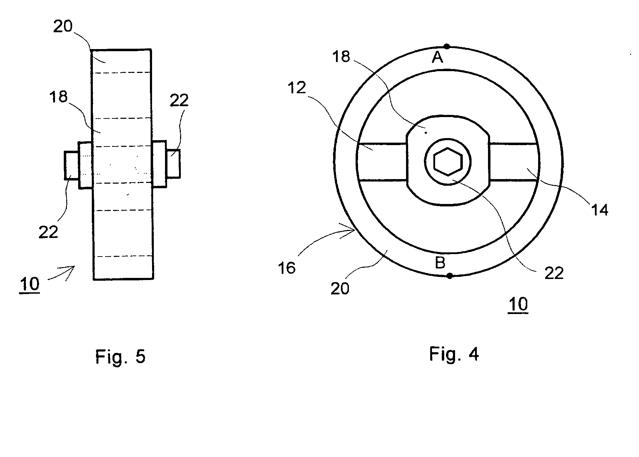

En référence aux figures 4 et 5, cet accord est obtenu grâce à la valeur judicieusement choisie de la masse de la contre-masse 18, et accessoirement de masses additionnelles 22 démontables et interchangeables, permettant un réglage fin sans nécessiter le démontage complet du module. Cette possibilité est utile pour corriger le désaccord introduit par le contact des sommets A ou B avec l'élément mené et par la précharge.

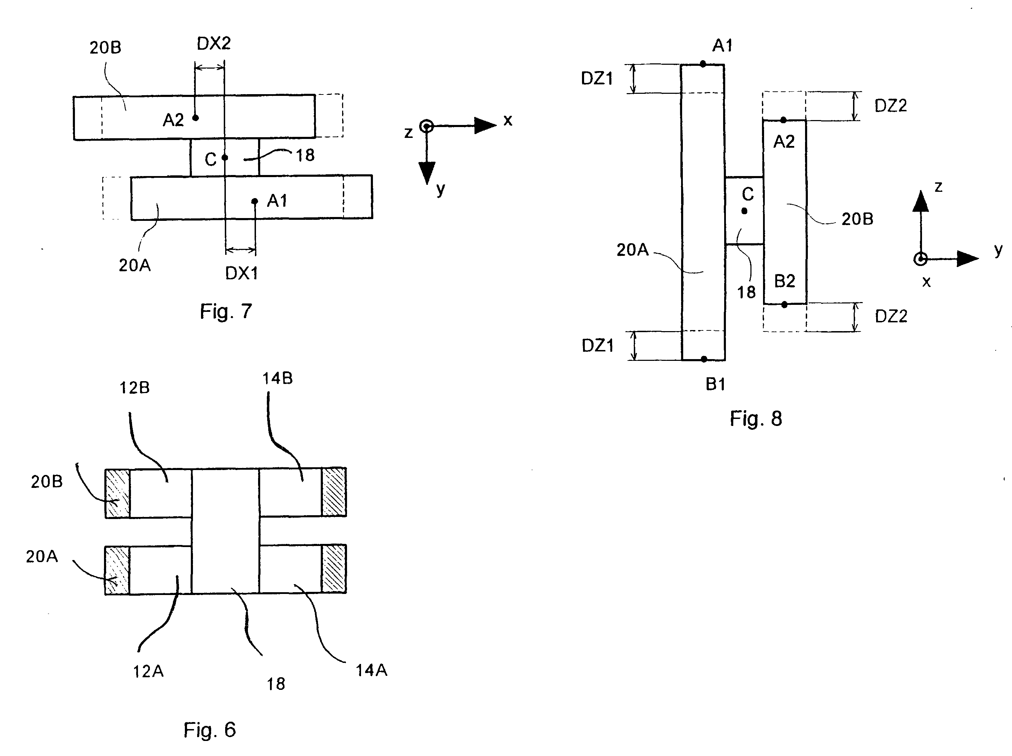

Les figures 6, 7 et 8 concernent un module à deux coques coaxiales 20A et 20B, reliées à la contre-masse commune 18 par les actionneurs piézoactifs 12A, 14A, 12B et 14B. Si les actionneurs sont alimentés de telle sorte que les déformations de l'actionneur 12A soient identiques à celles de l'actionneur 12B, de même que 14A par rapport à 14B, les déformations en translation et en flexion peuvent être produites rigoureusement de la même manière que décrit en figures 2 et 3. Les déplacements relatifs des sommets A1 et A2 des coques 20A, 20B sont alors en phase mécanique. L'accord des modes est obtenu grâce à la valeur judicieusement choisie de la masse de la contre-masse 18, avec accessoirement des masses additionnelles, et en notant que, dans les formules précédentes Mc représente la moitié de la masse de la contre-masse pour tenir compte du nombre de coques et d'actionneurs.

La présence de deux coques animées par deux paires indépendantes d'actionneurs offre toutefois des possibilités supplémentaires en terme notamment de déphasage mécanique des déplacements relatifs des sommets A1 et A2 des coques, ce qu'illustre les figures 7 et 8.

Les figures 7 et 8 représentent le module statorique respectivement en déformations en translation et en flexion, où les deux coques 20A, 20B sont en opposition de phase mécanique. Cette opposition de phase est produite en alimentant les paires d'actionneurs avec des tensions de signes contraires. Dans ces conditions, si les actionneurs piézoactifs se déforment longitudinalement à la même fréquence et de telle sorte les deux actionneurs d'une paire soient en quadrature de phase, les déplacements des sommets A1 et A2 des coques 20A, 20B décrivent des trajectoires fermées, par exemple elliptiques, en étant en opposition de phase l'un par rapport à l'autre. Ces déplacements permettent l'entraînement par frottement d'une pièce menée dans un fonctionnement en pas à pas. Ce fonctionnement est particulièrement avantageux dans le cas d'une utilisation en basse fréquence évitant tout effet d'inertie de l'élément mené, car il permet son arrêt en position sans glissement.

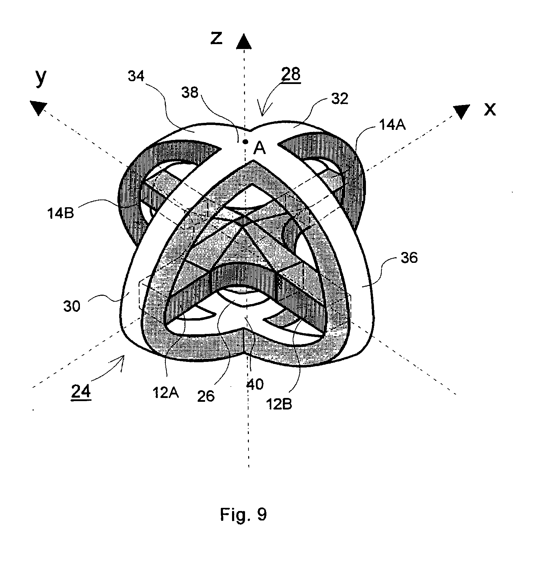

La figure 9 illustre un module statorique 24 de structure tridimensionnelle pour un moteur piézoactif à deux degrés de liberté. Le module statorique 24 est équipé dans la zone centrale d'une contre-masse 26 mobile, à laquelle sont associées en croix une première paire d'actionneurs piézoactifs 12A, 14A, et une deuxième paire d'actionneurs piézoactifs 12B, 14B, s'étendant respectivement selon deux axes x et y perpendiculaires. Une coque 28 constituant l'élément de couplage mécanique, comporte quatre branches 30, 32, 34, 36 en forme de demi-ellipsoïdes enveloppant les deux paires d'actionneurs 12A et 14A; 12B et 14B, et réunies l'une à l'autre par deux zones de liaison 38, 40 positionnées sur l'axe z s'étendant orthogonalement aux axes x et y. Les deux zones de liaison 38, 40 constituent les sommets de la coque 28.

La production des déformations dans le module statorique 24 de la figure 9 s'effectue de la manière suivante:

Une déformation en translation dans le plan x z est obtenue lorsque les actionneurs piézoactifs 12A et 14A de la première paire se déforment longitudinalement à la même fréquence en opposition de phase mécanique, et produisent un déplacement tangentiel suivant x des sommets A et B de la coque 28 relativement à la contre-masse 26.

De la même façon, une déformation en translation dans le plan y z est obtenue à l'aide de la seconde paire d'actionneurs 12B et 14B, et produit un déplacement tangentiel suivant y des sommets A et B relativement à la contre-masse 28.

La déformation en flexion est obtenue lorsque les actionneurs piézoactifs d'au moins une paire se déforment longitudinalement à la même fréquence, en phase mécanique, et produisent une flexion de la coque 28, la contre-masse 26 restant immobile au centre. Il en résulte un déplacement normal des sommets de la coque 28, suivant z.

La combinaison de ces deux types de déformation peut donner lieu à une trajectoire fermée des sommets A et B par exemple elliptique, situées dans un plan quelconque contenant l'axe z. Cette trajectoire peut être produite en régime quasi statique, ou de façon plus avantageuse, en exploitant un accord des modes de translation et de flexion, obtenu grâce à la contre-masse.

Le module statorique 24 de la figure 9 est adapté pour entraîner par frottement une pièce suivant les axes x et y, l'ensemble constituant un moteur piézoactif à deux degrés de liberté.

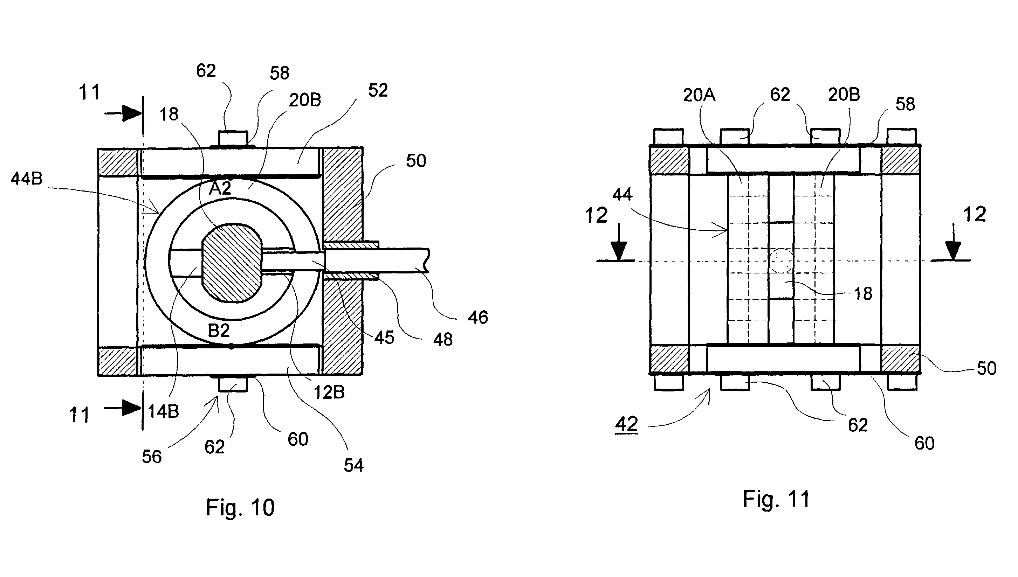

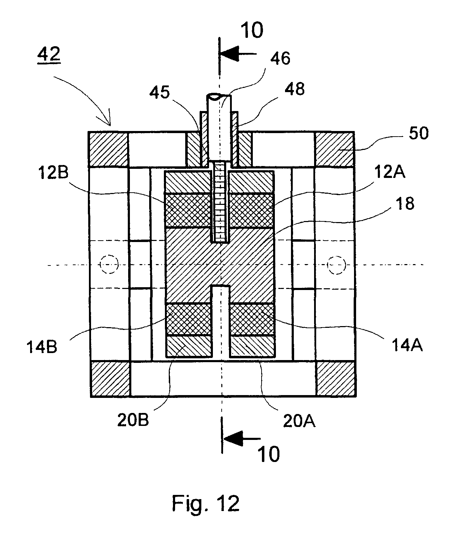

Un premier exemple de réalisation d'un moteur piézoactif linéaire 42 est représenté sur les figures 10 à 12, et comporte un module statorique 44 constitué de deux demi-modules symétriques 44A, 44B disposés en parallèle, ce module étant du type décrit en référence aux figures 6, 7, et 8. Les structures des demi-modules 44A, 44B sont identiques. La contre-masse 18 est commune aux demi-modules 44A, 44B, et l'arbre 46 d'actionnement du moteur 42 est accouplé mécaniquement à la contre-masse 18 par une lame de découplage 45 en passant entre les coques 20A, 20B. Le guidage en translation de l'arbre 46 est assuré à l'aide d'un palier 48 ménagé dans le bâti 50 fixe.

Le module statorique 44 est placé à l'intérieur du bâti 50 à deux plaques de guidage 52, 54 fixes venant en engagement avec les sommets A1, A2, B1, B2 des coques 20A, 20B de chaque demi-module 44A, 44B. Les deux plaques de guidage 52, 54 s'étendent parallèlement et symétriquement par rapport à l'arbre 46, et à la ligne d'action des actionneurs piézoactifs 12A, 14A, 12B, 14B, et coopèrent avec un dispositif de rattrapage de jeu 56 à liaison élastique assurant une précharge sur les coques 20A, 20B par leurs sommets A1, A2, B1, et B2. Cette précharge maintient en contact le module statorique au repos avec les faces internes des plaques 52, 54, lesquelles sont revêtues avec une couche de frottement.

Le dispositif de rattrapage de jeu 56 comprend à titre d'exemple des lames de flexion 58, 60 prenant appui en opposition sur les faces extérieures des plaques 52, 54. Les lames de flexion 58, 60 sont fixées par des vis 62, et exercent un effort de compression entre le module statorique 44 et les plaques de guidage 52, 54, engendrant l'effort bloqué en l'absence d'alimentation du moteur 42. Les lames de flexion peuvent bien entendu être remplacées pour tout autre type de ressort exerçant la même fonction.

Dans ce moteur linéaire, le module statorique est mobile par rapport au bâti. Il se déplace par frottement avec les deux plaques de guidage 52, 54 fixées au bâti, en entraînant l'arbre 46 en translation. Pour les grandes courses, il exploite le fonctionnement dynamique ou en pas à pas. Pour le positionnement fin, il exploite le fonctionnement en actionneur direct.

Dans le fonctionnement en dynamique, les trajectoires fermées des deux coques 20A, 20B induisent par frottement le mouvement relatif des plaques de guidage 52, 54 en profitant de leur inertie. Pour des questions de stabilité et de simplicité d'alimentation, il est préférable en général de faire vibrer les deux coques 20A, 20B en phase entre elles. Il est de plus avantageux d'utiliser l'accord des modes de translation et de flexion, en exploitant le fait que la contre-masse 18 puisse vibrer librement, ce qui est permis par le découplage élastique 45. En s'arrangeant de plus pour que la fréquence des modes soit ultrasonore, par exemple 20kHz ou plus, le moteur est silencieux et possède une vitesse à vide élevée, dépassant typiquement 1 cm/s.

Dans ce fonctionnement, les formes d'onde des tensions d'alimentation des actionneurs piézoactifs sont alternatives et périodiques, de forme et de fréquence identique pour tous les actionneurs, mais décalées dans le temps l'une de l'autre d'une fraction de période, par exemple un quart de période. Ces formes d'onde sont sinusoïdales en général mais pas obligatoirement, le décalage dans le temps correspondant alors à un déphasage, par exemple d'un angle de 90°.

Dans le fonctionnement en pas à pas, les trajectoires fermées des sommets des deux coques 20A, 20B sont déphasées entre elles et induisent par frottement le mouvement relatif des plaques de guidage 52, 54, en profitant de la raideur transverse de l'ensemble constitué de ces plaques et des lames ressort 58, 60. Cette raideur fait en sorte que lorsque le module passe par la déformation en flexion où les deux coques 20A, 20B sont en opposition de phase mécanique, décrite par la figure 8, les sommets d'une des coques se trouvent en contact avec les plaques 52, 54, pendant que les sommets de l'autre coque sont décollés. Le fonctionnement en pas à pas exploite les passages de cette déformation à la déformation en translation où les deux coques 20A, 20B sont en opposition de phase mécanique, décrite par la figure 9. A cause des symétries, les déplacements DX1 et DX2 sont identiques et notés DX. En moteur, les sommets des deux coques, sont tous contacts, en étant donc écartés d'une distance 2DX. Le passage de la première à la seconde déformation produit un quart de la trajectoire fermée des sommets des deux coques 20A, 20B. Une trajectoire fermée complète produit un pas élémentaire pouvant atteindre au mieux 4DX. Dans ce fonctionnement, aucun effet d'inertie des plaques 52, 54 n'est utilisé, ce qui permet un fonctionnement quasi-statique, par exemple à quelques dizaines ou centaines de Hertz, conduisant à une vitesse à vide lente, inférieure typiquement à 1 mm/s.

Dans ce fonctionnement, les formes d'onde des tensions d'alimentation des actionneurs piézoactifs sont périodiques, de fréquence identique pour tous les actionneurs. Elles peuvent être par exemple rectangulaires, triangulaires, ou trapézoïdales. Elles sont décalées l'une de l'autre d'une fraction de période, par exemple un quart de période. En prenant l'actionneur 12A pour référence, les décalages des formes d'onde des tensions d'alimentation des actionneurs 14A, 12B et 14B sont respectivement d'un quart, d'une demi et de trois quarts de période par exemple.

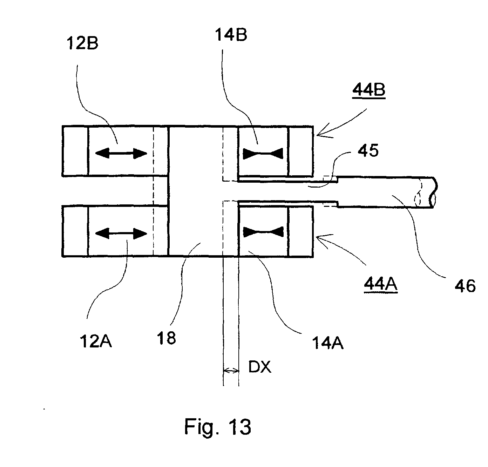

Dans le fonctionnement en actionneur direct, les sommets des coques 20A, 20B restent en contact sans glissement avec les plaques 52, 54, grâce à la précharge. Suivant la figure 13, l'utilisation d'une déformation en translation en quasi-statique produit un déplacement DX de la contre-masse 18 entraînant celui de l'arbre d'actionnement 46. Dans ce fonctionnement, les tensions d'alimentation des actionneurs piézoactifs 12A, 12B, 14A et 14B définissent directement et de façon à peu près proportionnelle, le micro-déplacement DX souhaité.

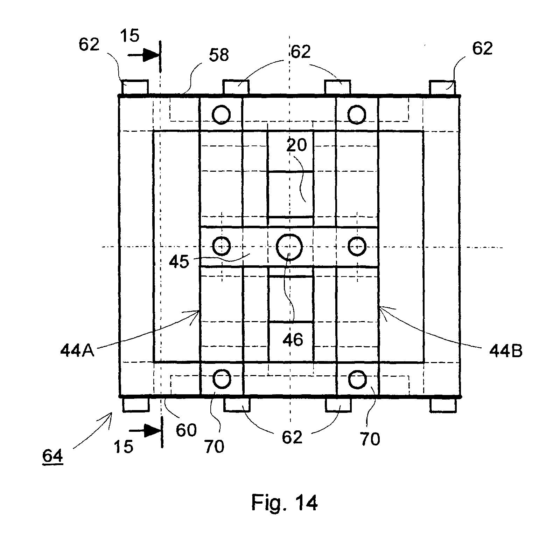

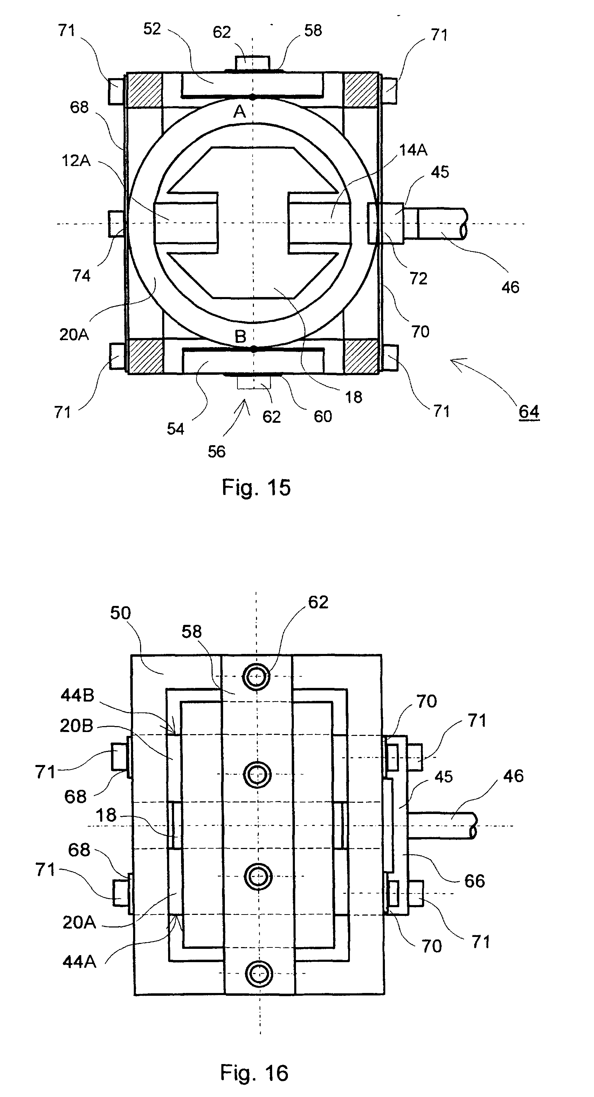

Un deuxième mode de réalisation d'un moteur piézoactif 64 linéaire est illustré sur les figures 14 à 16. Le module statorique 44 est similaire à celui décrit précédemment en référence aux figures 10 à12, mais l'arbre d'actionnement 46, au lieu d'être fixé à la masse d'inertie 18, est accouplé directement à l'avant des coques 20 des demi-modules 44A, 44B par l'intermédiaire d'une liaison à flexion 66. En plus des plaques de guidage 52, 54 et du dispositif de rattrapage de jeu 56 exerçant une précharge sur les coques 20 au niveau des sommets A et B, les demi-modules statoriques 44A , 44B sont positionnés par rapport au bâti 50 au moyen d'organes de guidage formés par des lames de flexion 68, 70 fixées au bâti 50 par des vis 71, et à l'avant 72 et à l'arrière 74 des coques 20. L'architecture du moteur 64 permet d'obtenir des courses en translation limitée, par exemple quelques millimètres, avec des raideurs transverses élevées. Aucun palier n'est nécessaire pour le guidage de l'arbre 46, le fonctionnement du moteur 64 s'effectuant sans lubrification.

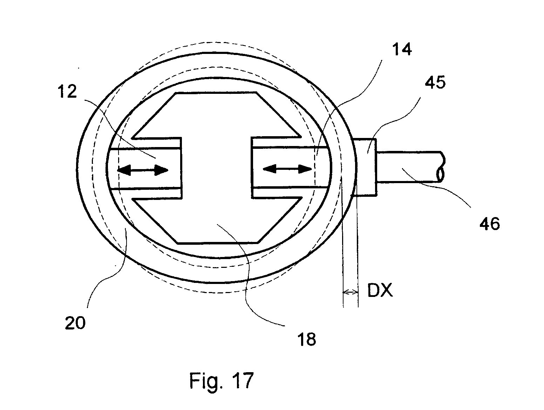

Dans ce moteur linéaire, le module statorique est mobile par rapport au bâti. Il se déplace par frottement avec les deux plaques de guidage 52, 54 fixées au bâti, en entraînant l'arbre 46 en translation. Pour les grandes courses, il exploite le fonctionnement dynamique ou en pas à pas, comme celui décrit en référence aux figures 10 à 12. Pour le positionnement fin, grâce au point de fixation de l'arbre 46 sur l'avant de la coque 20, il exploite avantageusement un fonctionnement en actionneur direct, dans lequel les actionneurs utilisent leur déformation en extension, et sont alimentés avec des tensions égales et positives. Dans ce fonctionnement, les sommets des coques restent en contact sans glissement avec les plaques, grâce à la précharge. Suivant la figure 17, l'utilisation d'une déformation en flexion en quasi-statique produit un déplacement DX de l'avant de la coque 20 entraînant le déplacement de l'arbre d'actionnement 46.

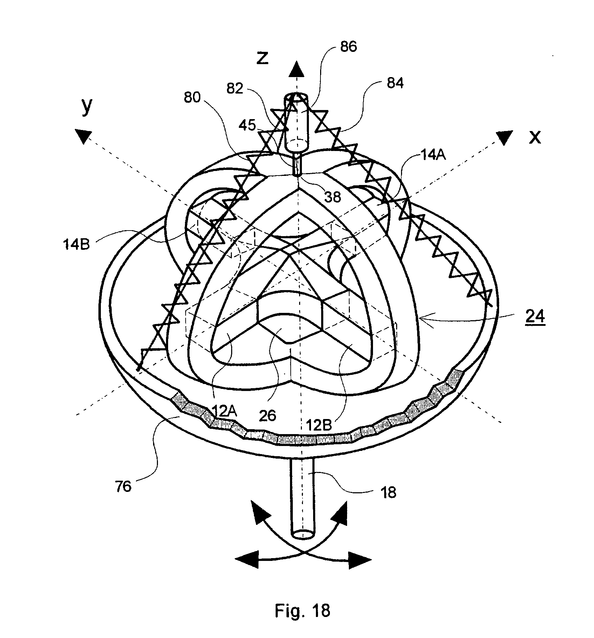

Un troisième mode de réalisation selon la figure 18 utilise le module statorique 24 de la figure 9, disposé à l'intérieur d'une coupelle 76 de logement à forme évasée pour constituer un moteur 78 à deux degrés de liberté en rotation, avec un débattement angulaire limité. Un dispositif à ressorts 80, 82, 84 est ancré entre la périphérie de la coupelle 76 et une tige 86 attachée à la zone de liaison 38 via une liaison élastique 45, de manière à exercer un effort de précontrainte entre le stator 24 et la coupelle 76, tout en assurant le découplage en vibration du module par rapport au bâti fixe (non représenté). L'excitation des actionneurs piézoactifs 12A, 14A avec des tensions alternatives en quadrature provoque un déplacement en rotation de la coupelle 76 autour de l'axe y. Inversement, la rotation de la coupelle 76 autour de l'axe x est possible lors de l'excitation des actionneurs 12B, 14B de la deuxième paire.

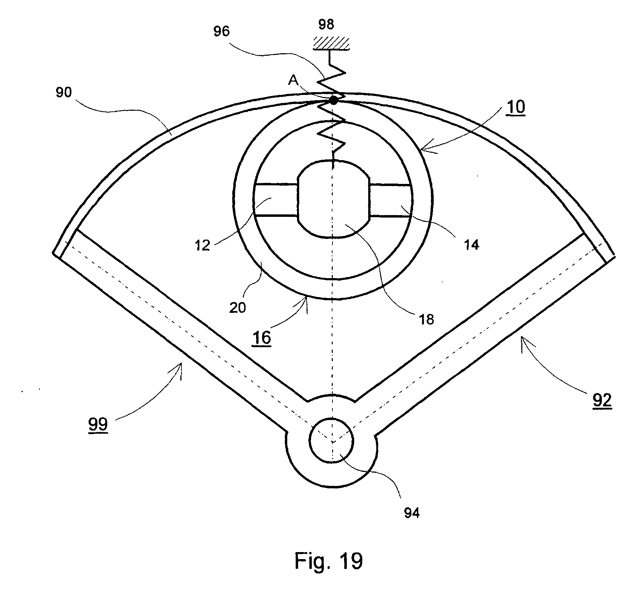

En référence à la figure 19, concernant un quatrième mode de réalisation, le module statorique 10 des figures 1 à 3 coopère par l'intermédiaire du sommet A de la coque 20 avec un secteur angulaire 90 d'une roue 92 articulée sur un axe 94 pour constituer un moteur piézoactif 99. Le maintien en appui de la coque 20 contre la face interne du secteur angulaire 90 est assuré au moyen d'un ressort 96 ancré entre la masse d'inertie 18 et un point d'ancrage 98 du bâti, disposé au-dessus du secteur 90. Une alimentation des actionneurs piézoactifs 12, 14 générant une trajectoire fermée du point A, provoque une rotation de l'axe 94.

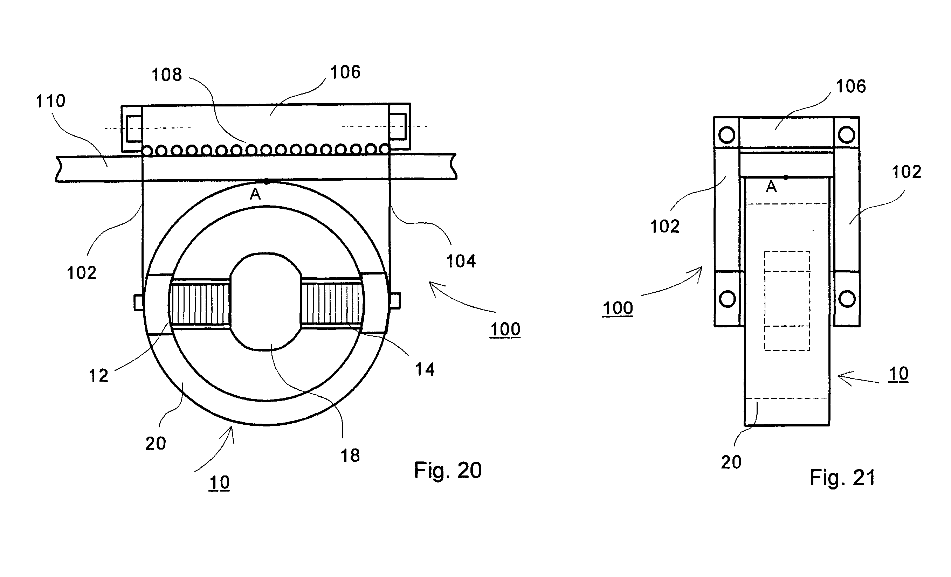

Le module statorique 10 de la figure 1 peut être utilisé pour concevoir un moteur linéaire 100, tel que représenté aux figures 20 et 21. La coque 20 du module statorique 10 est reliée par des lames élastiques 102, 104 assurant la précharge et le découplage du module, à un chariot de support 106, lequel est équipé d'une surface de glissement 108 portée par un guide 110 en forme de rail. Une alimentation des actionneurs piézoactifs 12, 14 générant une trajectoire fermée du point A, entraîne le déplacement en translation du chariot de support 106 le long du guide 110 de longueur illimitée.

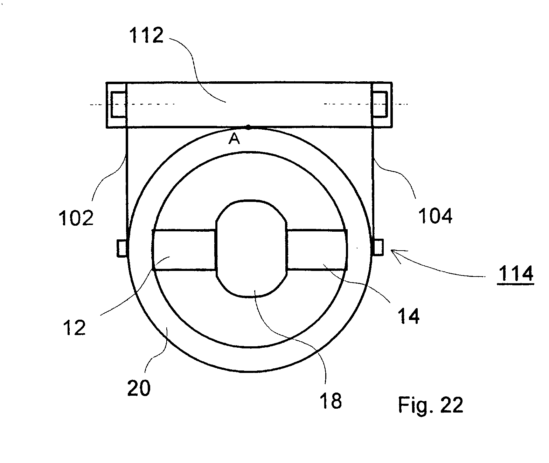

Dans la variante de la figure 22, la coque 20 du module statorique 10 est reliée par des lames élastiques 102, 104 aux extrémités opposées d'un guide 112 rectiligne, ayant une longueur prédéterminée, et s'étendant dans la direction de la ligne d'action des actionneurs 12, 14. L'ensemble constitue un moteur piézoélectrique 114 à course de débattement limitée.

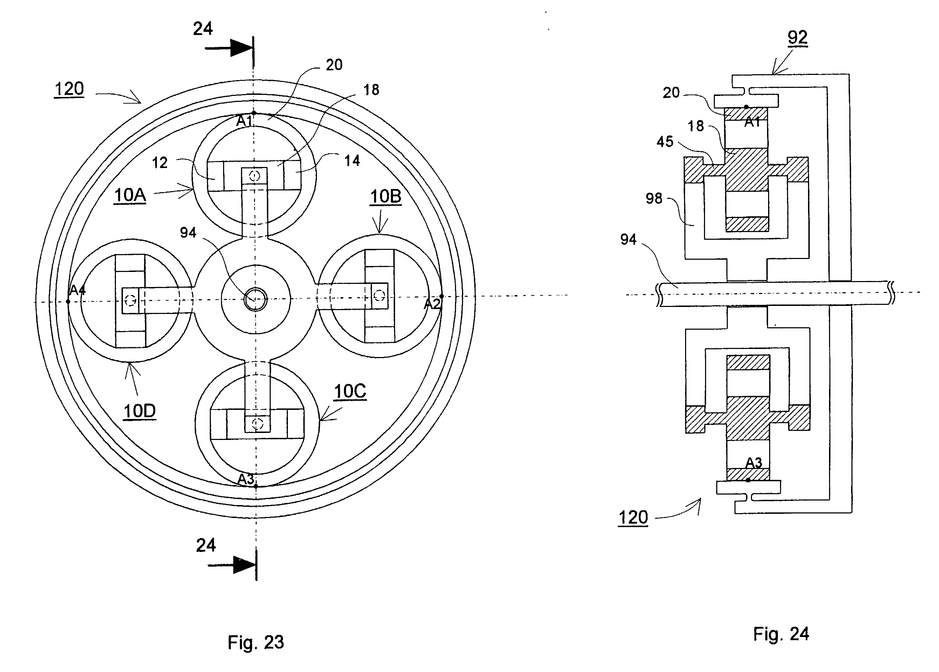

Les figures 23 et 24 présentent un moteur rotatif 120 dont le stator est composé de quatre modules statoriques 10A, 10B, 10C et 10D, indépendants. Chaque module a une structure identique à celle de la figure 1, et est fixé au bâti 98 du stator par sa contre-masse 18 via un amincissement élastique 45. Cet amincissement assure le découplage en vibration du module. Son élasticité est utilisée pour réaliser la précharge au montage et pour le rattrapage de jeu des modules. Chaque module est en contact par les points A1, A2, A3 et A4 avec le rotor 92 solidaire d'un axe 94. Une alimentation des actionneurs piézoactifs 12 et 14 de chaque module générant une trajectoire fermée des points A1, A2, A3 et A4 suivant un fonctionnement dynamique, provoque l'entraînement en rotation de l'axe 94. Un fonctionnement en actionneur direct des modules utilisant des déformations opposées des actionneurs 12 et 14 comme dans le cas de la figure 13 provoque une petit déplacement tangentiel des points A1, A2, A3 et A4 conduisant à un micropositionnement angulaire du rotor. Cette configuration de moteur pourrait utiliser aussi des modules à deux coques tels que décrits aux figures 6 à 8, en offrant en plus un mode de fonctionnement en pas à pas rotatif.

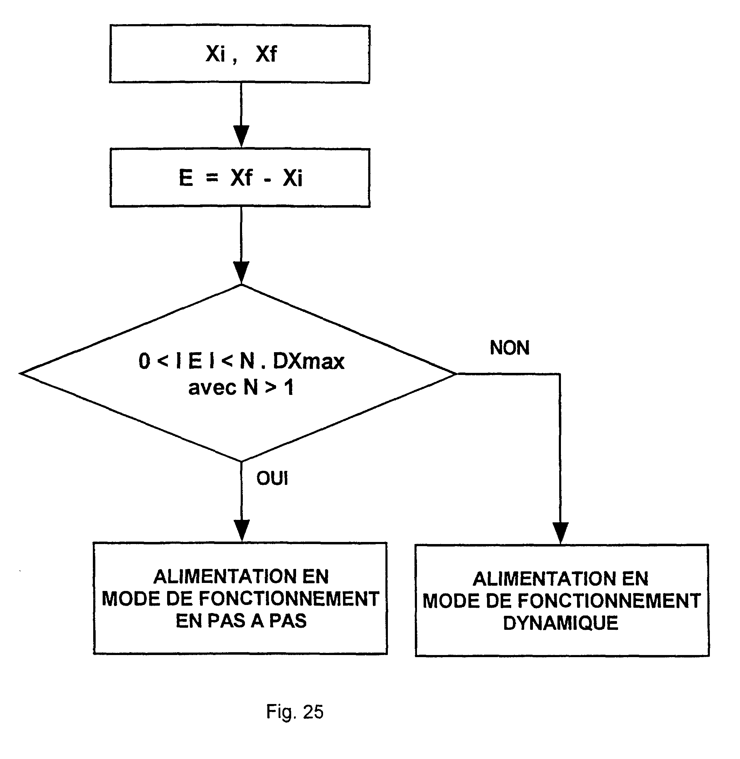

La figure 25 montre un premier cadencement applicable à des moteurs piézoactifs possédant les trois types de fonctionnement. Pour le moteur 42 illustré aux figures 10 et 11, il est préférable d'utiliser le mode de fonctionnement dynamique pour réaliser la partie la plus longue de la course, avant de passer en mode de fonctionnement en pas à pas, pour profiter d'un arrêt en freinage à la fois beaucoup plus court, et plus précis. Le mode de fonctionnement en actionneur direct intervient éventuellement en guise de troisième mode. L'utilisation combinée des premier et deuxième modes est illustrée sur l'organigramme de la figure 25, dans lequel Xi représente la position réelle du moteur, Xf est la position finale souhaitée, et E représente l'écart signé entre les deux positions Xf et Xi.

DXmax est le déplacement maximum en actionneur direct, et N constitue un paramètre toujours supérieur à 1, et préférentiellement de l'ordre de 10. Le passage du premier mode au deuxième mode intervient dès que la valeur absolue de l'écart signé E est inférieure à Nfois DXmax.

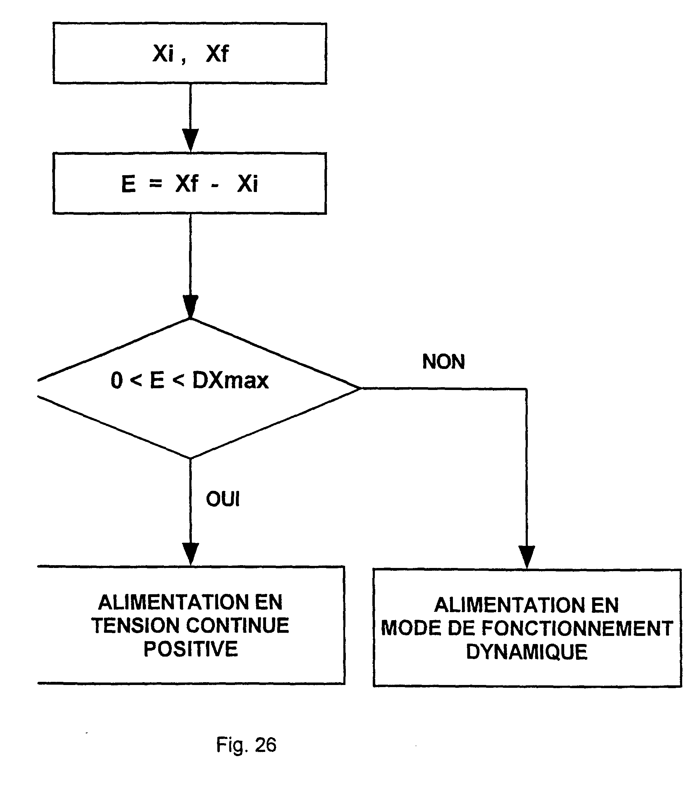

La figure 26 représente un deuxième cadencement adapté aux moteurs possédant un fonctionnement dynamique, et un fonctionnement en actionneur direct basé sur une déformation en flexion, par exemple le moteur de la figure 17. Pour ce type de moteur, il est recommandé d'utiliser le mode de fonctionnement dynamique pour effectuer la partie la plus longue de la course, avant de passer en mode de fonctionnement en actionneur direct, en exploitant le fait que le déplacement DX en actionneur direct est positif ( DX>0) et grand, étant donné que la limite en champ coercitif de la céramique n'est pas rencontrée. Une alimentation en tension continue positive est alors suffisante pour effectuer le déplacement. L'utilisation combinée des premier et troisième modes est donnée par l'organigramme de la figure 26, dans lequel on compare l'écart signé E entre la position finale Xf et la position réelle Xi du moteur, à DXmax représentant le déplacement maximum en mode actionneur direct, en définissant le sens positif de l'axe X des positions partant de la contre-masse 18 vers l'arbre d'actionnement 46. Tant que l'écart signé E n'est pas compris entre zéro et DXmax, on utilise le mode de fonctionnement dynamique. Lorsque l'écart signé E est compris entre zéro et DXmax, on utilise le mode de fonctionnement en actionneur direct.

## Revendications

1. Moteur piézoactif (42, 64, 99, 100, 114, 120) dont le stator est équipé d'un ou plusieurs modules statoriques (10, 10A, 10B, 10C, 10D, 24, 44) destinés, en vibrant, à provoquer le déplacement relatif d'un élément mené sur une grande course à l'aide de moyens d'entraînement par frottement, les dits modules statoriques permettant de plus, en se déformant, le positionnement fin de l'élément mené, chaque module statorique comportant au moins :

   - une paire d'actionneurs piézoactifs (12, 14, 12A, 14A, 12B, 14B) disposés colinéairement et excités électriquement de façon à se déformer et produire des petits déplacements longitudinaux,
   - un élément de couplage mécanique (16) auquel sont appliquées les déplacements des deux actionneurs, le dit élément étant constitué par un anneau conformé en coque (20, 20A, 20B, 28), et réalisé en un matériau élastique déformable, en entourant chaque paire d'actionneurs par fixation en deux points opposés,

   **caractérisé en ce que**

   - chaque module statorique (10, 10A, 10B, 10C, 10D, 24, 44) est indépendant des autres, est libre de vibrer, et n'est fixé à d'autres pièces que par des liaisons élastiques (45, 66, 68, 70, 96, 102, 104) assurant un découplage en vibration,
   - chaque module statorique comporte de plus une contre-masse centrale (18, 26) jouant le rôle d'inertie, insérée sans jeu à l'intérieur des coques (20, 20A, 20B, 28) entre les actionneurs piézoactifs (12, 14, 12A, 14A, 12B, 14B) et les coques (20, 20A, 20B, 28),
   - des premiers moyens de déformation en translation, sont actifs lorsque lesdits actionneurs piézoactifs se déforment longitudinalement en opposition et produisent un déplacement tangentiel des sommets (A et B) de la coque (20, 28) relativement à la contre-masse (18, 26),
   - des seconds moyens de déformation en flexion, sont actifs lorsque lesdits actionneurs piézoactifs se déforment longitudinalement de la même façon et produisent une flexion de la coque (20, 28) entraînant un déplacement normal des sommets (A et B), la contre-masse (18, 26) restant immobile au centre,
   - le rapport de masse entre la contre-masse (18, 26) et la coque (20, 28) est choisi pour qu'en vibration en translation, les déformations longitudinales des actionneurs internes génèrent un déplacement de la coque, d'amplitude non négligeable par rapport à celle de la contre-masse,

- la combinaison des premiers et seconds moyens de déformation étant obtenue lorsque lesdits actionneurs piézoactifs (12, 14, 12A, 14A, 12B, 14B) se déforment longitudinalement à la même fréquence avec un déphasage mécanique différent de 0° ou 180°, et produisent une trajectoire fermée des sommets (A et B) utilisable pour provoquer par frottement le déplacement relatif de l'élément mené.

2. Moteur piézoactif selon la revendication 1, **caractérisé en ce que** le rapport des masses de la contre-masse (18, 26) et de la coque (20, 28) est choisi pour obtenir un accord des modes de translation et de flexion.

3. Moteur piézoactif selon la revendication 2, **caractérisé en ce qu'**au moins une masse additionnelle démontable (22) fixée sur chaque contre-masse (18, 26) autorise le réglage du rapport de masse pour obtenir un accord des modes de translation et de flexion.

4. Moteur piézoactif selon la revendication 1 ou 3, **caractérisé en ce que** les modules statoriques (44) sont formés de deux demi-modules symétriques (44A, 44B) associés à une contre-masse (18) commune sur laquelle sont fixées deux paires d'actionneurs piézoactifs (12A, 14A, 12B, 14B) en parallèle, chaque paire étant liée à une coque (20A, 20B).

5. Moteur piézoactif selon la revendication 4, **caractérisé en ce que** le module statorique (44) est placé à l'intérieur d'un bâti (50) à deux plaques de guidage (52, 54) fixes venant en engagement avec les sommets (A et B) opposés des coques (20), lesdites plaques s'étendant parallèlement et symétriquement par rapport à la ligne d'alignement des actionneurs piézoactifs (12, 14).

6. Moteur piézoactif selon la revendication 5, **caractérisé en ce que** les plaques de guidage (52, 54) coopèrent avec un dispositif de rattrapage de jeu (56) à liaison élastique assurant une précharge desdites plaques de guidage sur les coques (20).

7. Moteur piézoactif selon la revendication 6, **caractérisé en ce que** l'arbre (46) d'actionnement du moteur (42) est accouplé mécaniquement à la contre-masse (18) par un organe de découplage élastique (45), et que le dispositif de rattrapage de jeu (56) comporte deux lames de flexion (58, 60) agencées en opposition sur les faces extérieures des plaques de guidage (52, 54).

8. Moteur piézoactif selon la revendication 5 ou 6, **caractérisé en ce que** l'arbre (46) d'actionnement du moteur (64) est accouplé directement à· l'avant des coques (20) par l'intermédiaire d'une liaison élastique à flexion (66), et que les modules statoriques (44A, 44B) sont positionnés par rapport au bâti (50) au moyen d'organes de guidage élastique (68, 70) fixés au bâti (50), ainsi qu'à l'avant (72) et à l'arrière (74) des coques (20).

9. Moteur piézoactif selon l'une des revendications 1, 2 ou 3, **caractérisé en ce que** le module statorique (24) présente une structure tridimensionnelle adaptée à un moteur à deux degrés de liberté comprenant:

- une première paire d'actionneurs piézoactifs (12A, 14A) placés colinéairement de part et d'autre de la contre-masse (26),
- une deuxième paire d'actionneurs piézoactifs (12B, 14B) disposés colinéairement de part et d'autre de la contre-masse (26), et orthogonalement à la première paire,
- la coque (28) comprenant quatre branches (30, 32, 34, 36) en forme de demi-ellipsoïdes enveloppant lesdits actionneurs de manière à générer aux sommets (A, B) de la coque des déplacements dans trois directions orthogonales entre elles.

10. Moteur piézoactif selon la revendication 9, **caractérisé en ce que** le module statorique (24) est disposé à l'intérieur d'une coupelle (76), et coopère avec un dispositif à ressorts (80, 82, 84) pour constituer un moteur à deux degrés de liberté en rotation sur un débattement angulaire limité.

11. Moteur piézoactif selon la revendication 1, **caractérisé en ce que** des moyens d'alimentation en tension continue des actionneurs piézoactifs (12, 14) permettent un déplacement statique de l'arbre (46) d'actionnement lorsque ce dernier est fixé à la contre-masse (18) dans une déformation en translation.

12. Moteur piézoactif selon la revendication 1, **caractérisé en ce que** des moyens d'alimentation en tension continue des actionneurs piézoactifs (12, 14) permettent un déplacement statique de l'arbre (46) d'actionnement lorsque ce dernier est fixé à la coque (20) dans une déformation en flexion.

13. Moteur piézoactif selon la revendication 1 ou 3, **caractérisé en ce que** la coque (20) du module statorique (10) du moteur (99) coopère avec un secteur angulaire (90) d'une roue (92) articulée sur un axe (94), un ressort (96) étant ancré entre la contre-masse (18), et un point d'ancrage (98).

14. Moteur piézoactif selon la revendication 1 ou 3, **caractérisé en ce que** la coque (20) du module statorique (10) d'un moteur linéaire (100) est reliée par des moyens de liaison élastique (102, 104) à un chariot de support (106), lequel est doté d'une surface de glissement (108) facilitant le déplacement de l'ensemble le long d'un guide (110) en forme de rail.

15. Moteur piézoactif selon la revendication 1 ou 3, **caractérisé en ce que** la coque (20) du module statorique (10) est reliée par des moyens de liaison élastique aux extrémités opposées d'un guide (112) rectiligne ayant une longueur prédéterminée, et s'étendant parallèlement à la direction d'alignement des actionneurs (12, 14) pour former un moteur (114) à débattement limité.

16. Moteur piézoactif selon la revendication 1 ou 3, **caractérisé en ce que** le stator comporte plusieurs modules statoriques (10A, 10B, 10C, 10D) répartis en étoile et coopérant avec la surface cylindrique interne d'un rotor (92) pour entraîner en rotation un arbre (94).

17. Moteur piézoactif selon la revendication 4, **caractérisé en ce que** le positionnement de l'arbre d'actionnement (46) est assuré au moyen d'un cadencement comprenant :

    - des moyens pour élaborer l'écart signé E entre la position finale Xf souhaité, et la position réelle Xi de l'arbre (46),
    - des moyens pour comparer l'écart E avec un multiple N du déplacement maximum DXmax en mode actionneur direct, le passage du premier mode de fonctionnement dynamique au deuxième mode de fonctionnement pas à pas, intervenant dès que la valeur absolue de l'écart E est inférieure à N fois DXmax.

18. Moteur piézoactif selon la revendication 12, **caractérisé en ce que** le positionnement de l'arbre d'actionnement (46) est assuré au moyen d'un cadencement comprenant :

    - des moyens pour élaborer l'écart signé E = Xf-Xi entre la position finale Xf souhaité, et la position réelle Xi de l'arbre (46), en définissant le sens positif de l'axe X des positions partant de la contre-masse (18) vers l'arbre d'actionnement (46),
    - des moyens pour comparer l'écart E avec le déplacement maximum DXmax en mode actionneur direct, le passage du premier mode de fonctionnement dynamique vers le troisième mode de fonctionnement en actionneur direct, intervenant lorsque l'écart signé E est compris entre zéro et le déplacement DXmax,
    - des moyens d'alimentation en tension continue positive pour le déplacement de l'arbre pendant le troisième mode de fonctionnement en actionneur direct.

**Patentansprüche**

1. Piezoaktiver Motor (42, 64, 99, 100, 114,120) mit einem Stator mit einem oder mehr Statormodul (10, 10A, 10B, 10C, 10D, 24, 44), die beim Schwingen die relative Bewegung eines angetriebenen Elementes auf einen Großhub mit Hilfe von Reibantriebsmitteln erzeugen, wobei die genannten Statormodule durch ihre Verformung die Feinpositionierung des angetriebenen Elementes ferner erlauben, und wobei jeder Statormodul umfaßt mindestens :

    - ein Paar von piezoaktiven Betätigungsvorrichtungen (12, 14, 12A, 14A, 12B, 14B), die kolinear angeordnet, und elektrisch erregt sind, so daß sie sich verformen, und kleine Längsbewegungen erzeugen,
    - ein mechanisches Kupplungselement (16), an das die Bewegungen der zwei Betätigungsvorrichtungen übertragt sind, wobei das genannte Kupplungselement aus einem elastischen verformbaren Material hergestellt ist, und aus einem als eine Schale ausgestalten Ring (20, 20A, 20B, 28) besteht, der jedes Paar von Betätigungsvorrichtungen durch Befestigung an zwei gegenüberliegenden Stellen umgibt,

    **dadurch gekennzeichnet, daß**

    - jeder Statormodul (10, 10A, 10B, 10C, 10D, 24, 44) unabhängig von den anderen ist, frei schwingen kann, und an anderen Teilen nur durch elastische Verbindungsglieder (45, 66, 68, 70, 96, 102, 104) mit einer Schwingentkopplung befestigt ist,
    - jeder Statormodul eine zentrale Gegengewicht (18, 26) ferner umfaßt, die eine Trägheitsrolle spielt, und innerhalb der Schalen (20, 20A, 20B, 28) zwischen den piezoaktiven Betätigungsvorrichtungen (12, 14, 12A, 14A, 12B, 14B) und den Schalen (20, 20A, 20B, 28) spielfrei eingebaut ist,
    - erste Mittel für die Verschiebungsverformung aktiv sind, wenn sich die genannten piezoaktiven Betätigungsvorrichtungen in der Längsrichtung in Opposition verformen, und eine tangentiale Bewegung der Spitzen (A und B) der Schale (20, 28) relativ zur Gegengewicht (18, 26) erzeugen,

- zweite Mittel für die Biegeverformung aktiv sind, wenn sich die genannten piezoaktiven Betätigungsvorrichtungen in der Längsrichtung auf die gleiche Weise verformen, und eine Biegung der Schale (20, 28) erzeugen, die eine normale Bewegung der Spitzen (A und B) zur Folge hat, wobei die Gegengewicht (18, 26) bewegungslos am Zentrum bleibt,

- das Massenverhältnis zwischen der Gegengewicht (18, 26) und der Schale (20, 28) ausgewählt ist, damit beim Verschiebungsschwingen die Längsverformungen der inneren Betätigungsvorrichtungen eine Schalenbewegung mit einer nicht unerheblichen Schwingungsamplitude relativ zu dieser der Gegengewicht erzeugen,

wobei die Kombination der ersten und der zweiten Verformungsmittel erhalten ist, wenn die genannten piezoaktiven Betätigungsvorrichtungen (12, 14, 12A, 14A, 12B, 14B) in der Längsrichtung mit der gleichen Frequenz und mit einer mechanischen Phasenverschiebung anders als 0° oder 180° sich verformen, und eine geschlossene Bahn der Spitzen (A und B) erzeugen, die zur Reiberzeugung der relativen Bewegung des angetrieben Elementes verwendbar ist.

2. Piezoaktiver Motor nach Anspruch 1, **dadurch gekennzeichnet, daß** das Massenverhältnis zwischen der Gegengewicht (18, 26) und der Schale (20, 28) zum Erhalten einer Anpassung der Verschiebungsart und der Biegeart ausgewählt ist.

3. Piezoaktiver Motor nach Anspruch 2, **dadurch gekennzeichnet, daß** mindestens eine zusätzliche ausbaubare Masse (22), befestigt an jeder Gegengewicht (18, 26), die Einstellung des Massenverhältnis zum Erhalten einer Anpassung der Verschiebungsart und der Biegeart erlaubt.

4. Piezoaktiver Motor nach Anspruch 1 oder 3, **dadurch gekennzeichnet, daß** die Statormodule (44) aus zwei symmetrischen Halbmodulen (44A, 44B) bestehen, die einer gemeinsamen Gegengewicht (18) zugeordnet sind, an der zwei Paare von piezoaktiven Betätigungsvorrichtungen (12A, 14A, 12B, 14B) parallel befestigt sind, wobei jedes Paar mit einer Schale (20A, 20B) verbindet ist.

5. Piezoaktiver Motor nach Anspruch 4, **dadurch gekennzeichnet, daß** der Statormodul (44) innerhalb eines Gestelles (50) mit zwei festen Führungsplatten (52, 54) angeordnet ist, welche sich mit den gegenüberliegenden Spitzen (A und B) der Schalen (20) eingreifen, wobei sich die genannten Platten relativ zur Fluchtlinie der piezoaktiven Betätigungsvorrichtungen (12, 14) parallel und symmetrisch erstrecken.

6. Piezoaktiver Motor nach Anspruch 5, **dadurch gekennzeichnet, daß** die Führungsplatten (52, 54) mit einer Nachstellvorrichtung (56) mit elastischer Verbindung für eine Vorbelastung der genannten Führungsplatten an die Schalen (20) zusammenwirken.

7. Piezoaktiver Motor nach Anspruch 6, **dadurch gekennzeichnet, daß** die Betätigungswelle (46) des Motors (42) an der Gegengewicht (18) durch ein elastisches Entkopplungsorgan (45) mechanisch gekoppelt ist, und daß die Nachstellvorrichtung (56) zwei Biegeblätter (58, 60) aufweist, die auf den Außenflächen der Führungsplatten (52, 54) in Opposition angeordnet sind.

8. Piezoaktiver Motor nach Anspruch 5 oder 6, **dadurch gekennzeichnet, daß** die Betätigungswelle (46) des Motors (64) an der Vorseite der Schalen (20) durch ein elastisches Biegeverbindungsglied (66) unmittelbar gekoppelt ist, und daß die Statormodule (44A, 44B) relativ zum Gestell (50) mit elastischen Führungsorganen (68, 70), befestigt am Gestell wie auch an der Vorseite (72) und der Hinterseite (74) der Schalen (20), positioniert sind.

9. Piezoaktiver Motor nach einem der Ansprüche 1, 2 oder 3, **dadurch gekennzeichnet, daß** der Statormodul (24) einen dreidimensionalen Aufbau, angepaßt an einen Motor mit zwei Freiheitsgraden, aufweist, welcher umfaßt:

- ein erstes Paar von piezoaktiven Betätigungsvorrichtungen (12A, 14A), angeordnet kolinear von beiden Seiten der Gegengewicht (26),

- ein zweites Paar von piezoaktiven Betätigungsvorrichtungen (12B, 14B), angeordnet kolinear von beiden Seiten der Gegengewicht (26) und senkrecht zum ersten Paar,

- die Schale (28) mit vier Zweigen (30, 32, 34, 36) in der Form von Halbellipsoiden, die die genannten Betätigungsvorrichtungen zum Erzeugen von Bewegungen in drei senkrechten zu einander Richtungen an der Spitze (A, B) der Schale umgeben.

10. Piezoaktiver Motor nach Anspruch 9, **dadurch gekennzeichnet, daß** der Statormodul (24) innerhalb einer Kupelle (76) angeordnet ist, und mit einer Federvorrichtung (80, 82, 84) zusammenwirkt, um einen Motor mit zwei Freiheitsgraden zu bilden, welcher mit einer begrenzten Winkelbewegung dreht.

11. Piezoaktiver Motor nach Anspruch 1, **dadurch ge-**

**kennzeichnet, daß** Mittel für die Gleichspannungsversorgung der piezoaktiven Betätigungsvorrichtungen (12, 14) eine Statische Bewegung der Betätigungswelle (46) erlauben, wenn diese an der Gegengewicht (18) bei einer Verschiebungsverformung befestigt ist.

12. Piezoaktiver Motor nach Anspruch 1, **dadurch gekennzeichnet, daß** Mittel für die Gleichspannungsversorgung der piezoaktiven Betätigungsvorrichtungen (12, 14) eine Statische Bewegung der Betätigungswelle (46) erlauben, wenn diese an der Schale (20) bei einer Biegeverformung befestigt ist.

13. Piezoaktiver Motor nach Anspruch 1 oder 3, **dadurch gekennzeichnet, daß** die Schale (20) des Statormodules (10) des Motors (99) zusammen mit einem Winkelsektor (90) eines um eine Achse (94) ausschwenkbaren Rads (92) wirkt, wobei eine Feder (96) zwischen der Gegengewicht (18) und einer Verankerungsstelle (98) verankert ist.

14. Piezoaktiver Motor nach Anspruch 1 oder 3, **dadurch gekennzeichnet, daß** die Schale (20) des Statormodules (10) eines Linearmotors (100) durch elastische Verbindungsmittel (102, 104) mit einem Stützschlitten (106) verbindet ist, welcher mit einer Gleitfläche (108) zum Erleichtern der Bewegung des Aufbaus längs einer als eine Schiene ausgestalte Führung (110) versehen ist.

15. Piezoaktiver Motor nach Anspruch 1 oder 3, **dadurch gekennzeichnet, daß** die Schale (20) des Statormoduls (10) durch elastische Verbindungsmittel mit den gegenüberliegenden Enden einer geradlinigen Führung (112) von einer vorbestimmten Länge verbindet ist, welche sich parallel zur Fluchtrichtung der Betätigungsvorrichtungen (12, 14) erstreckt, um einen Motor (114) mit begrenzter Bewegung zu bilden.

16. Piezoaktiver Motor nach Anspruch 1 oder 3, **dadurch gekennzeichnet, daß** der Stator mehrere als einen Stern ausgestaltete Statormodule (10A, 10B, 10C, 10D) ausweist, die mit der zylindrischen Innenfläche eines Rotors (92) zum Drehantrieb einer Welle (94) zusammenwirken.

17. Piezoaktiver Motor nach Anspruch 4, **dadurch gekennzeichnet, daß** die Positionierung der Betätigungswelle (46) durch eine Taktvorrichtung ausgeführt ist, welche aufweist:

   - Mittel zum Bestimmen des gezeichneten Abstandes E zwischen der gewünschten Endstellung Xfund der tatsächlichen Stellung Xi der Welle (46),
   - Mittel zum Vergleichen des Abstandes E mit einem Vielfach N des maximalen Bewegungswerts Dxmax bei einer Betriebsart als direkter Betätigungsvorrichtung, wobei sich der Übergang von der ersten dynamischen Betriebsart zur zweiten schrittweise Betriebsart ereignet, sobald der Absolutwert des Abstandes E kleiner als N mal Dxmax ist.

18. Piezoaktiver Motor nach Anspruch 12, **dadurch gekennzeichnet, daß** die Positionierung der Betätigungswelle (46) durch eine Taktvorrichtung ausgeführt ist, welche aufweist:

   - Mittel zum Bestimmen des gezeichneten Abstandes E = Xf-Xi zwischen der gewünschten Endstellung Xf und der tatsächlichen Stellung Xi der Welle (46), dadurch daß die positive Richtung der Achse X der Stellungen ausgehend von der Gegengewicht (18) zur Betätigungswelle (46) bestimmt ist,
   - Mittel zum Vergleichen des Abstandes E mit dem maximalen Bewegungswert Dxmax bei einer Betriebsart als direkter Betätigungsvorrichtung, wobei sich der Übergang von der ersten dynamischen Betriebsart zur dritten Betriebsart als direkter Betätigungsvorrichtung ereignet, wenn der gezeichnete Abstand zwischen null und des Bewegungswerts Dxmax ist,
   - Mittel für die positive Gleichspannungsversorgung zum Bewegen der Welle während der dritten Betriebsart als direkter Betätigungsvorrichtung.

**Claims**

1. A piezoactive motor (42, 64, 99, 100, 114, 120) having a stator which is equipped with one or more stator modules (10, 10A, 10B, 10C, 10D, 24, 44) designed, by vibrating, to cause relative movement of a driven part over a large travel by means of driving means by friction, said stator modules, by deforming, in addition enabling fine positioning of the driven part, each stator module comprising at least:

   - one pair of colinearly arranged piezoactive actuators (12, 14, 12A, 14A, 12B, 14B) electrically excited so as to deform and produce small longitudinal movements,
   - a mechanical coupling element (16) to which the movements of the two actuators are applied, said element being formed by a ring shaped as a shell (20, 20A, 20B, 28) and made of a deformable flexible material, surrounding each pair of actuators by fixing at two opposite points, **characterized in that**:

   - each stator module (10, 10A, 108, 10C, 10D, 24, 44) is independent from the others, is free to vibrate, and is only fixed to other parts by flexible links (45, 66, 68, 70, 96, 102, 104) performing decoupling in vibration,

- each stator module comprises in addition a central countermass (18, 26) playing the role of inertia, inserted without clearance inside the shells (20, 20A, 20B, 28) between the piezoactive actuators (12, 14, 12A, 14A, 12B, 14B) and the shells (20, 20A, 20B, 28),

- first means of deformation in translation are active when said piezoactive actuators are deformed longitudinally in opposition and produce a tangential movement of the peaks (A and B) of the shell (20, 28) relatively to the countermass (18, 26),

- second means of deformation in flexion are active when said piezoactive actuators are deformed longitudinally in the same way and produce a flexion of the shell (20, 28) resulting in a normal movement of the peaks (A and B). the countermass (18, 26) remaining immobile in the centre,

- the mass ratio between the countermass (18, 26) and the shell (20, 28) is chosen so that in vibration in translation, the longitudinal deformations of the internal actuators generate a movement of the shell, of non-negligible amplitude with respect to that of the countermass,

- a combination of said first and second means is obtained when said piezoactive actuators (12, 14, 12A, 14A, 12B, 14B) are deformed longitudinally at the same frequency with a mechanical phase difference different from 0° or 180°, and produce a closed trajectory of the peaks (A and B) usable to cause relative movement of the driven part by friction.

2. The piezoactive motor according to claim 1, **characterized in that** the ratio of the mass of the countermass (18, 26) and of the shell (20, 28) is chosen to obtain tuning of the translational and flexional modes.

3. The piezoactive motor according to claim 2, **characterized in that** at least one removable additional mass (22) fixed onto each countermass (18, 26) enables the mass ratio to be adjusted to obtain tuning of the translational and flexional modes.

4. The piezoactive motor according to claim 1 or 3, **characterized in that** the stator modules (44) are formed by two symmetrical half-modules (44A, 44B) associated to a common countermass (18) on which two pairs of piezoactive actuators (12A, 14A, 12B, 14B) are fixed in parallel, each pair being linked to a shell (20A, 20B).

5. The piezoactive motor according to daim 4, **characterized in that** the stator module (44) is placed inside a frame (50) with two fixed guide plates (52, 54) coming into engagement with the opposite peaks (A and B) of the shells (20), said plates extending parallel and symmetrically with respect to the alignment line of the piezoactive actuators (12, 14).

6. The piezoactive motor according to daim 5, **characterized in that** the guide plates (52, 54) cooperate with a clearance take-up device (56) with a flexible link performing preloading of said guide plates on the shells (20).

7. The piezoactive motor according to claim 6, **characterized in that** the actuating shaft (46) of the motor (42) is mechanically coupled to the countermass (18) by a flexible decoupling part (45), and that the clearance take-up device (56) comprises two flexion blades (58, 60) arranged in opposition on the external faces of the guide plates (52, 54).

8. The piezoactive motor according to daim 5 or 6, **characterized in that** the actuating shaft (46) of the motor (64) is directly coupled to the front of the shells (20) by means of a flexible link with flexion (66), and that the stator modules (44A, 44B) are positioned with respect to the frame (50) by means of flexible guide parts (68, 70) fixed to the frame (50) and also to the front (72) and rear (74) of the shells (20).

9. The piezoactive motor according to one of the claims 1, 2 or 3, **characterized in that** the stator module (24) presents a three-dimensional structure suited to a motor with two degrees of freedom comprising:

- a first pair of piezoactive actuators (12A, 14A) placed colinearly on each side of the countermass (26),

- a second pair of piezoactive actuators (12B, 14B) arranged colinearly on each side of the countermass (26) and orthogonally to the first pair,

- the shell (28) comprising four branches (30, 32, 34, 36) in the form of semi-ellipses surrounding said actuators, so as to generate at the peaks (A, B) of the shell movements in three directions orthogonal to one another.

10. The piezoactive motor according to claim 9, **characterized in that** the stator module (24) is arranged inside a cup (76), and cooperates with a spring device (80, 82, 84) to form a motor with two degrees of freedom in rotation on a limited angular movement.

**11.** The piezoactive motor according to claim 1, **characterized in that** means for supplying the piezoactive actuators (12, 14) with DC voltage enable static movement of the actuating shaft (46) when the latter is fixed to the countermass (18) in a translational deformation.

**12.** The piezoactive motor according to claim 1, **characterized in that** means for supplying the piezoactive actuators (12, 14) with DC voltage enable static movement of the actuating shaft (46) when the latter is fixed to the shell (20) in a flexional deformation.

**13.** The piezoactive motor according to claim 1 or 3, **characterized in that** the shell (20) of the stator module (10) of the motor (99) cooperates with an angular sector (90) of a wheel (92) articulated on a spindle (94); a spring (96) being secured between the countermass (18) and a securing point (98).

**14.** The piezoactive motor according to claim 1 or 3, **characterized in that** the shell (20) of the stator module (10) of a linear motor (100) is linked by flexible linking means (102, 104) to a support carriage (106), which is provided with a sliding surface (108) facilitating movement of the assembly along a guide (110) in the form of a rail.

**15.** The piezoactive motor according to claim 1 or 3, **characterized in that** the shell (20) of the stator module (10) is linked by flexible linking means to the opposite ends of a straight guide (112) having a preset length, and extending parallel to the direction of alignment of the actuators (12, 14) to form a motor (114) with limited movement.

**16.** The piezoactive motor according to claim 1 or 3, **characterized in that** the stator comprises several stator modules (10A, 10B, 10C, 10D) arranged in a star-shape and cooperating with the internal cylindrical surface of a rotor (92) to drive a shaft (94) in rotation.

**17.** The piezoactive motor according to claim 4, **characterized in that** positioning of the actuating shaft (46) is performed by means of a movement control comprising:

- means for establishing the signed difference E between the final position Xf required and the actual position Xi of the shaft (46),
- means for comparing the difference E with a multiple N of the maximum movement DXmax in direct actuator mode, switching from the first dynamic operating mode to the second step by step operating mode only taking place as soon as the absolute value of the difference E is less than N times DXmax.

**18.** The piezoactive motor according to claim 12, **characterized in that** positioning of the actuating shaft (46) is performed by means of a movement control comprising:

- means for establishing the signed difference E = Xf-Xi between the final position Xf required and the actual position Xi of the shaft (46), defining the positive direction of the X axis of the positions from the countermass (18) to the actuating shaft (46),
- means for comparing the difference E with the maximum movement DXmax in direct actuator mode, switching from the first dynamic operating mode to the third direct actuator operating mode only taking place when the signed difference E is comprised between zero and the movement DXmax,
- means for supply of positive DC voltage for movement of the shaft during the third direct actuator operating mode.

Fig. 1

Fig. 2

Fig. 3

20

18

22

22

10

Fig. 5

18

12

A

16

20

B

14

22

10

Fig. 4

Fig. 8

Fig. 7

Fig. 6

Fig. 9

Fig. 10

Fig. 11

EP 0 910 871 B1

Fig. 12

Fig. 13

Fig. 14

Fig. 15

Fig. 16

Fig. 17

Fig. 18

Fig. 19

Fig. 21

Fig. 20

Fig. 22

Fig. 24

Fig. 23

```
┌─────────────────────────┐
│        Xi ,   Xf        │
└─────────────────────────┘
             │
             ▼
┌─────────────────────────┐
│       E  =  Xf - Xi      │
└─────────────────────────┘
             │
             ▼
        ◇ 0 < I E I < N . DXmax
          avec N > 1            ◇ ──── NON
             │                           │
            OUI                          │
             ▼                           ▼
┌─────────────────────────┐   ┌─────────────────────────┐
│    ALIMENTATION EN      │   │    ALIMENTATION EN      │
│ MODE DE FONCTIONNEMENT  │   │ MODE DE FONCTIONNEMENT  │
│     EN PAS A PAS        │   │       DYNAMIQUE         │
└─────────────────────────┘   └─────────────────────────┘
```

Fig. 25

Fig. 26